# EUROPEAN PATENT APPLICATION

(11) **EP 4 485 413 A1**
(43) Date of publication of application: **01.01.2025**
(21) Application number: 23191697.4
(22) Date of filing: 16.08.2023
(51) Int. Cl.: G07F 11/16, G07F 17/32, G07F 11/64

(54) **PUSH TYPE PRIZE GAME MACHINE**

(30) Priority: 28.06.2023 KR 20230083475
(71) Applicant: Komuse Co., Ltd., Paju-si, Gyeonggi-do (KR)
(72) Inventor: KANG, Nam Ho, Gyeonggi-do (KR); BYUN, Ji Sung, Gyeonggi-do (KR); BAEK, Ryeol, Gyeonggi-do (KR); PARK, Seong Ho, Gyeonggi-do (KR); HA, Heon Young, Gyeonggi-do (KR)
(74) Representative: Danubia Patent & Law Office LLC

(57) **Abstract**

The present disclosure relates to a push type prize game machine, and by moving a pressing device to a position corresponding to a hook clip by a horizontal driving unit and an elevation driving unit and pressing the hook clip by the pressing device, the hook clip of which any one of both ends is pressed by the pressing device moves rearward from the prize holder to be separately dropped from the prize holder in order to discharge a prize or the hook clip of which a central portion is pressed rotates in place to restrict the rearward movement to block the prize from being discharged. According to the present disclosure, it is possible to prevent damage to a product by directly hitting a hook clip by a pressing device so that the hook clip on which a prize is hung is separately dropped from a prize holder in order to acquire the prize, there is no change in a level of difficulty of a game according to a volume or load of the prize by arranging the hook clips having the same shape on the prize holder, a user can accurately recognize a hit position of the hook clip by allowing the hook clip to move rearward when any one end of both ends of the hook clip is hit and allowing the hook clip to rotate in place when a central portion of the hook clip is hit to restrict the rearward movement, and one of any age can easily play the game due to an exposure of an accurate hit position of the hook clip, thereby inducing the interest in the game for acquiring the prize and at the same time, improving reliability of products.

## Description

### BACKGROUND

### 1. Field of the Invention

The present disclosure relates to a game machine, and more specifically, to a push type prize game machine for allowing a user to acquire a prize hung on a hook clip by fixedly hanging the hook clip, which is moved rearward by pressing any one of both ends thereof by a pressing device or rotated in place by pressing a central portion thereof by the pressing device, on a prize holder of a housing and pressing the hook clip to be separately dropped from the prize holder.

### 2. Discussion of Related Art

In general, a game machine is a device for allowing a user to acquire a designated prize according to a win-loss result of a game and includes a prize dispenser for allowing the user to obtain an even greater sense of accomplishment in enjoying the game.

In this case, in such a game vending machine, a win-loss result of a game may be determined according to a control ability of a user to allow the user who enjoys the game to obtain a sense of accomplishment and simultaneously acquire a prize.

Patent Document 1 discloses a conventional game prizes discharge device, and referring to this, the conventional product discharge game device includes a frame having a hollow shape with an open front surface and including a plurality of product display shelfs formed to be vertically partitioned to display products formed at one side thereof and a product storage unit formed at the other side thereof, one side door and the other side door, which are symmetrical to each other and rotate to open and close the front surface of the frame, formed at both sides of the front surface of the frame, and a push bar installed at one side of a housing to correspond to the product display shelf to operate in a vertical direction and a front-rear direction to push products seated on the product display shelf.

Here, partition units having a through hole formed therein are installed in the product display shelf, and a push bar detection unit is provided at a rear end of each of the partition units.

In addition, products having a relatively smaller volume than the products accommodated in the product storage unit are seated on the product display shelf in which the partition units are not installed, and products having a relatively larger volume are accommodated in the product storage unit.

Thereafter, by driving a push bar driving unit through a control unit so that the push bar is positioned collinearly with the product seated on the product display shelf, and in that state, by moving the push bar forward to push the product seated on the product display shelf rearward, the product is separately dropped from the product display shelf, and thus the product is acquired.

On the other hand, when the push bar driving unit is driven through the control unit so that the push bar is positioned collinearly with any one of the through holes of the partition unit and in that state, the push bar passes through the through hole, the push bar detection unit detects the push bar entering the through hole and at this time, any one of product withdrawal doors connected to the push bar detection unit is opened.

Then, the product storage unit in which the product is accommodated is opened by rotating the opened product withdrawal door upward, and in that state, the product accommodated in the product storage unit is acquired.

However, in Patent Document 1, there is a problem in that a difference in an area hit by the push bar according to a volume of the product or a product moving-rearward moving distance according to a load of the product occurs, resulting in a rapid difference in a level of difficulty in a game according to products, users who are weak in the game, such as the elderly or children, have difficulty in identifying the level of difficulty of the game, resulting in a rapid reduction in interest in the game, a manager may forcibly fit products between the product display shelfs to artificially increase the level of difficulty of the game and recognition of the game machine is negatively changed due to the artificial increase in the visually recognizable level of difficulty of the game, and in particular, the products are damaged because the products seated on the product display shelfs are directly hit by the push bar, thereby rapidly reducing the user's interest in the game and at the same time, lowering reliability of the product.

### [Related Art Document]

### (Patent Document)

(Patent Document 1) Korean Patent No. 10-1739355 B1

### SUMMARY OF THE INVENTION

The present disclosure is directed to providing a push type prize game machine, which includes a housing including a viewing window formed on a front surface thereof, support units formed on both inner side surfaces thereof, and a prize holder connecting the support units, horizontal driving units formed on inner upper and lower surfaces of the housing to be horizontally slid, an elevation driving unit formed between the horizontal driving units to be moved up and down,, and a pressing device to be horizontally operated in a direction of the prize holder formed on an upper surface of the elevation driving unit, and in a state in which a hook clip on which prizes are hung is fixedly hung on the prize holder, by moving the pressing device to a position corresponding to the hook clip by the horizontal driving unit and the elevation driving unit to press the hook clip by the pressing device, the hook clip of which any one of both ends is pressed by the pressing device moves rearward from the prize holder to be separately dropped from the prize holder in order to discharge a prize or the hook clip of which a central portion is pressed rotates in place to restrict the rearward movement to block the prize from being discharged.

A push type prize game machine according to the present disclosure includes a housing having a hollow shape, and including a viewing window formed on a front surface thereof, support units formed to protrude upright on both inner side surfaces thereof, and a prize holder installed to connect the support units, horizontal driving units symmetrically provided on inner upper and lower surfaces of the housing and slidably installed to horizontally move, an elevation driving unit installed between the horizontal driving units to move up and down, a pressing device installed on an upper surface of the elevation driving unit to horizontally operate toward the prize holder of the housing, and a hook clip hung on the prize holder of the housing, allowing a prize to be hung on a lower end thereof, and moved rearward to an end of the prize holder by pressing any one of both ends of the hook clip by the pressing device or rotated in place on the prize holder by pressing a central portion thereof by the pressing device.

In the push type prize game machine according to the present disclosure, a front plate having a plurality of hanging rods formed to be spaced a predetermined distance from each other in a longitudinal direction of a rear surface thereof may be further formed in the prize holder of the housing, and the hook clip may include a moving frame seated on the hanging rod to horizontally move along the hanging rod, and a hitting frame rotatably installed at both ends of the moving frame to rotate in place about the moving frame by hitting a central portion thereof by the pressing device, and having hitting plates formed on both side surfaces thereof and configured to guide the moving frame to be horizontally moved by being hit by the pressing device to allow the prize to be hung on a lower end thereof.

In the push type prize game machine according to the present disclosure, the prize holder of the housing may further include a rear plate installed symmetrically with the front plate and having a drop prevention hook formed at a lower end of a surface facing the hanging rod, and the hook clip may further include a rotational support shaft connecting the lower ends of the hitting frame, and a prize hook unit provided between the hitting frame and the prize, rotatably installed on the rotational support shaft, having a hanging groove of which one surface is open to allow the prize to be hung on an inner side thereof, formed in a lower end thereof, and having a drop prevention rotational shaft, which is hung on the drop prevention hook when the hook clip is separately dropped from the hanging rod to guide the hanging groove to rotate downward, formed around the hanging groove.

In the housing of the push type prize game machine according to the present disclosure, an end of the hanging rod of the front plate may be formed to extend to be inclined at a predetermined angle.

In the push type prize game machine according to the present disclosure, the housing may further include a drop hole formed in the inner lower surface thereof, a prize outlet communicating with the drop hole to discharge the prize to a lower end of the front surface of the housing, a prize storage unit communicating with the drop hole to accommodate the prize inside the housing, an opening/closing door rotatably installed between the prize outlet and the prize storage unit to rotate so that the prize outlet or the prize storage unit communicates with the drop hole, a detection sensor installed to be exposed to a front surface of the rear plate and pressed by the hook clip separated from the hanging rod to rotate the opening/closing door so that the drop hole communicates with the prize outlet, and a drop stopper installed on a lower end of the detection sensor to be exposed to the front surface of the rear plate to allow the rotational support shaft of the hook clip to be hung thereon or release the hanging from the rotational support shaft so that the hook clip is dropped downward by moving rearward to enter the rear plate after receiving a signal of the detection sensor.

In the push type prize game machine according to the present disclosure, the housing may further include an illegality detection sensor fixedly installed on a wall surface of an inner lower end thereof to operate in response to vibrations applied to the housing and configured to rotate the opening/closing door to allow the drop hole and the prize storage unit to communicate with each other so that the prize dropped from the drop stopper is supplied to the prize storage unit.

In the push type prize game machine according to the present disclosure, the horizontal driving unit may further include horizontal guide bars symmetrically installed on the inner upper and lower surfaces of the housing, horizontal movement blocks slidably coupled to the horizontal guide bars to horizontally move along the horizontal guide bars, a horizontal driving belt connected to the horizontal movement block and having both ends connected to pulleys installed at both sides of the inner lower surface of the housing to rotate, and a first driving motor connected to any one of the pulleys to rotate the pulley.

In the push type prize game machine according to the present disclosure, the elevation driving unit may further include an upright guide bar installed upright to connect the horizontal driving units, an elevation block slidably coupled to the upright guide bar to vertically move up and down along the upright guide bar, a second driving motor installed on an upper surface of the horizontal driving unit installed on the inner lower surface of the housing to transmit power, and an upright driving belt installed to connect the second driving motor to the horizontal driving unit installed on the inner upper surface of the housing to force the elevation block to move up or down while rotating.

In the push type prize game machine according to the present disclosure, the pressing device may further include a pinion gear installed to be exposed to the upper surface of the elevation driving unit, a third driving motor installed to be embedded inside the elevation driving unit to be connected to the pinion gear to rotate the pinion gear, a rack gear installed on the upper surface of the elevation driving unit to be engaged with the pinion gear, having a hitting bar formed on a front end thereof, and configured to horizontally move to move toward the prize holder or move in an opposite direction to the prize holder by the rotating pinion gear, and guide rollers installed at both sides of the upper surface of the elevation driving unit based on the rack gear and in close contact with both side surfaces of the rack gear to guide the rack gear to horizontally move.

In the push type prize game machine according to the present disclosure, the rack gear may have a hitting protrusion having any one of circular, semicircular, elliptical, or polygonal shapes formed at an end of the hitting bar.

### BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings, in which:
FIG. 1 is a perspective view illustrating a push type prize game machine according to the present disclosure;
FIG. 2 is a perspective view illustrating a state in which a front surface of a housing of the push type prize game machine according to the present disclosure is open;
FIG. 3 is a perspective view illustrating an inner lower end portion of the housing of the push type prize game machine according to the present disclosure;
FIG. 4 is a perspective view illustrating a state in which prizes are hung on a prize holder of the push type prize game machine according to the present disclosure;
FIGS. 5 and 6 are perspective views illustrating a state in which left and right sides of a hook clip are alternately pressed by a pressing device of the push type prize game machine according to the present disclosure;
FIG. 7 is an exploded perspective view illustrating the pressing device of the push type prize game machine according to the present disclosure;
FIG. 8 is a perspective view illustrating a state in which the hook clip of the push type prize game machine according to the present disclosure is hung on an end of a hanging rod;
FIG. 9 is a perspective view illustrating a state in which the hook clip of the push type prize game machine according to the present disclosure is dropped and is hung on a drop stopper;
FIG. 10 is a perspective view illustrating a state in which the hook clip of the push type prize game machine according to the present disclosure is rotated to drop; and
FIG. 11 is a perspective view illustrating a state in which a central portion of the hook clip of the push type prize game machine according to the present disclosure is pressed by the pressing device.

### DETAILED DESCRIPTION OF EXEMPLARY EMBODIMENTS

Hereinafter, embodiments of the present disclosure will be described in more detail with reference to the accompanying drawings.

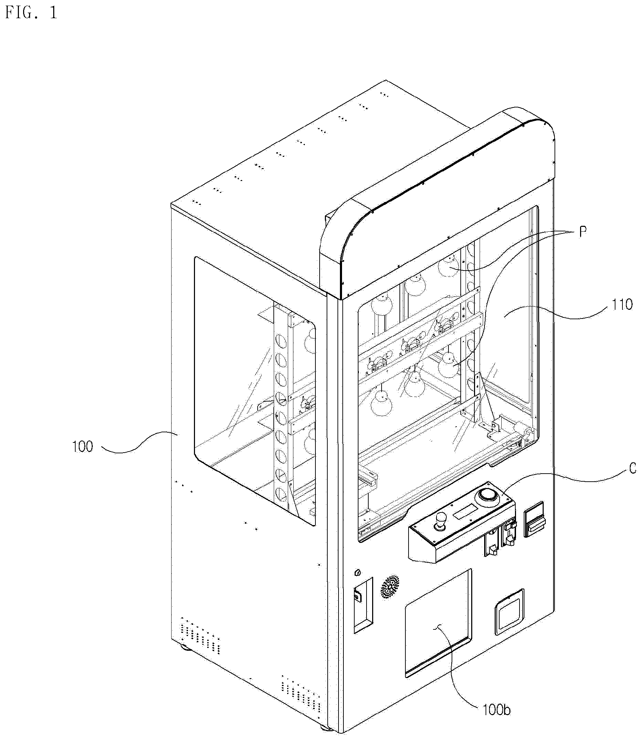

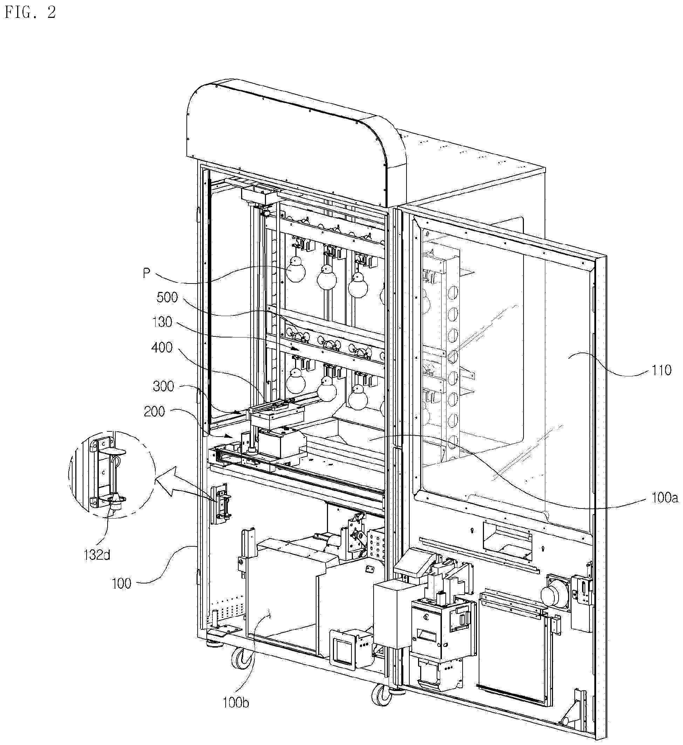

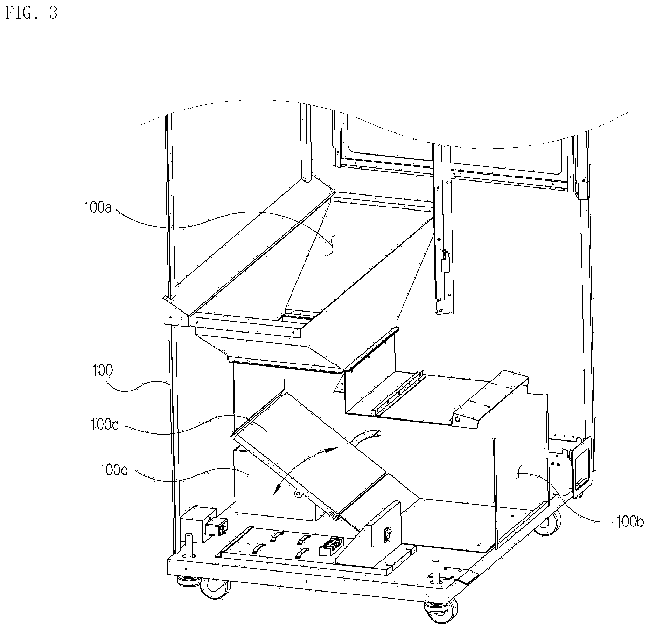

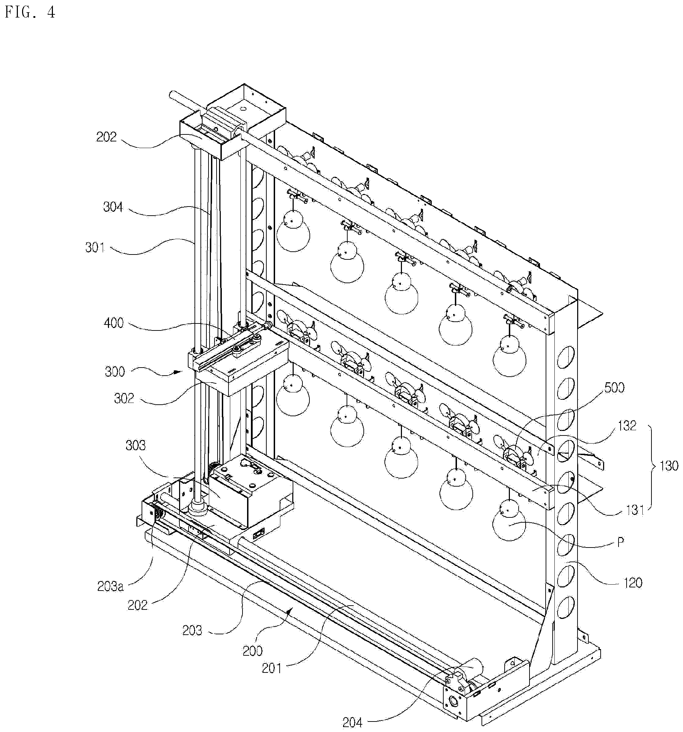

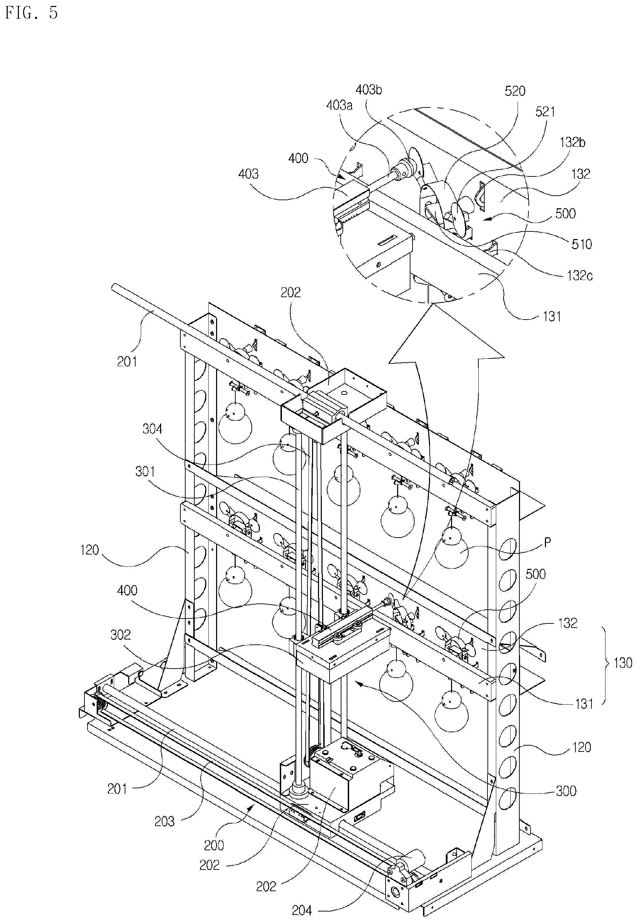

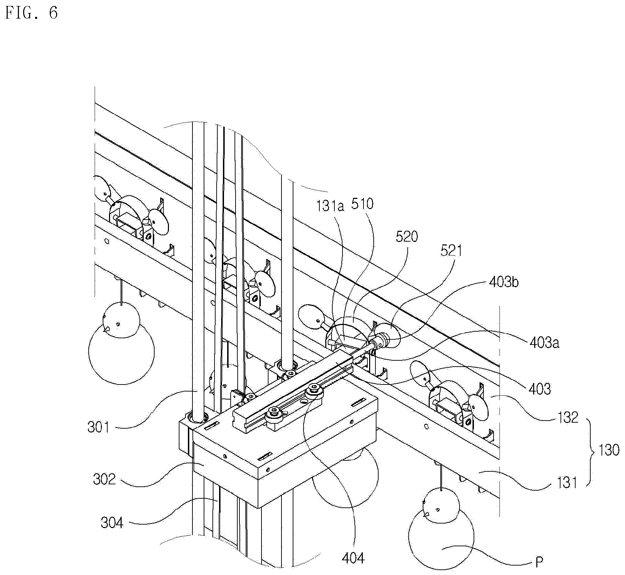

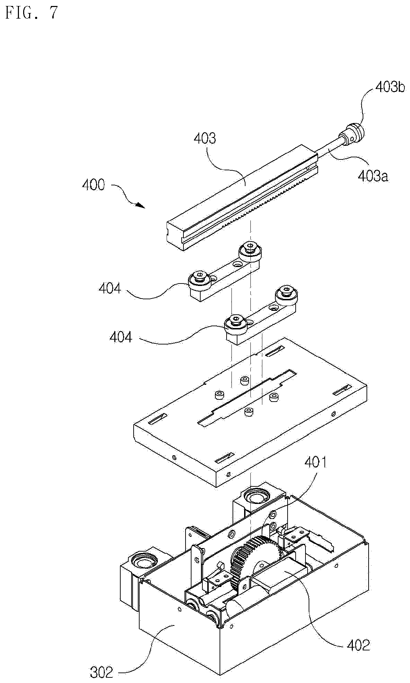

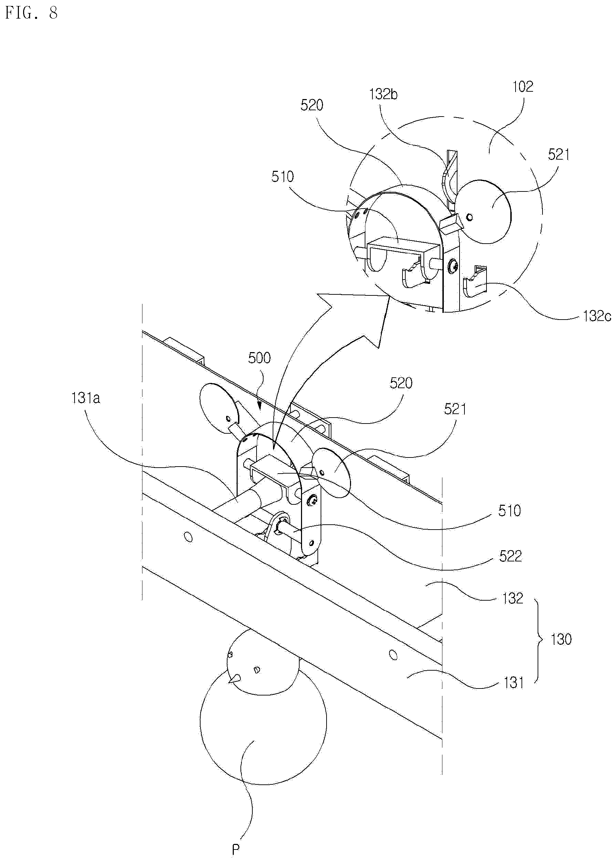

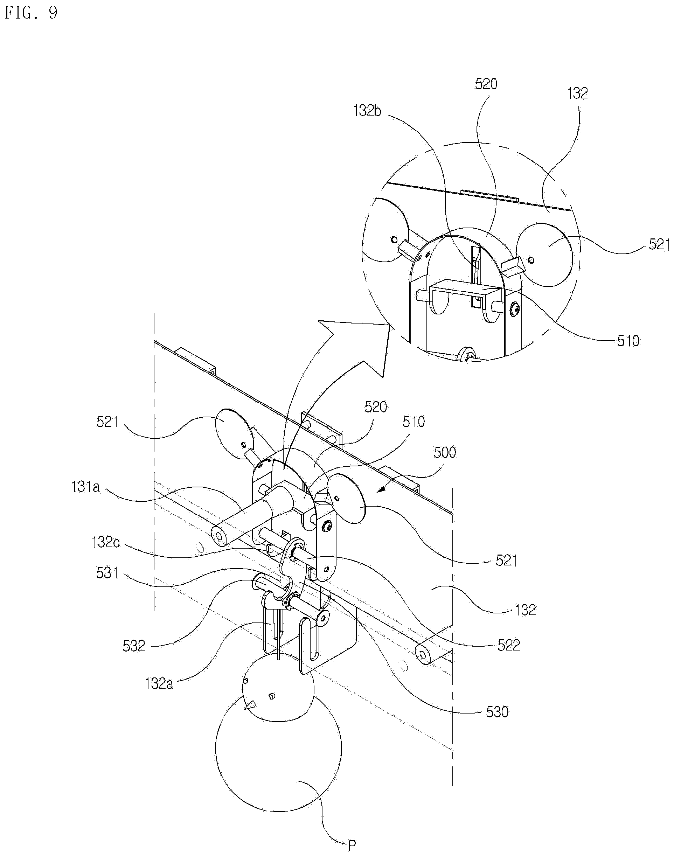

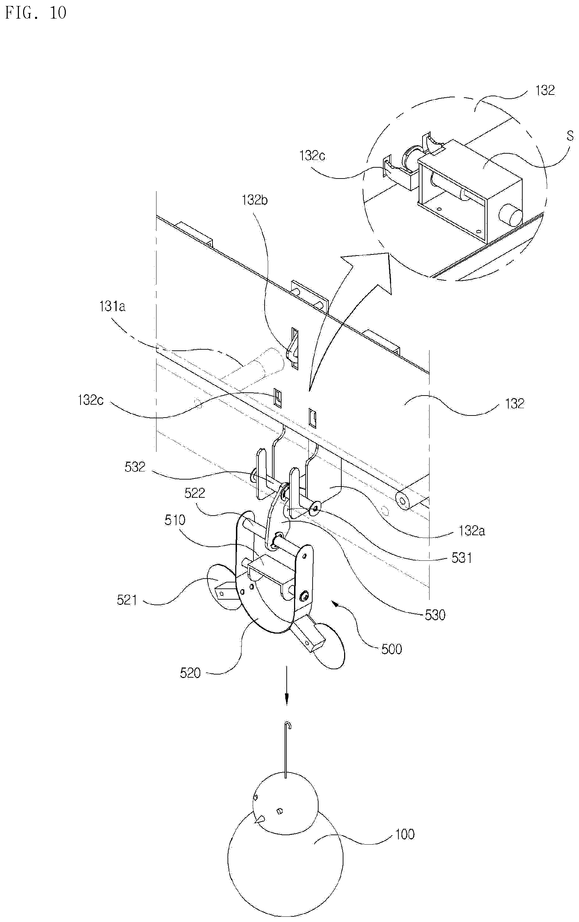

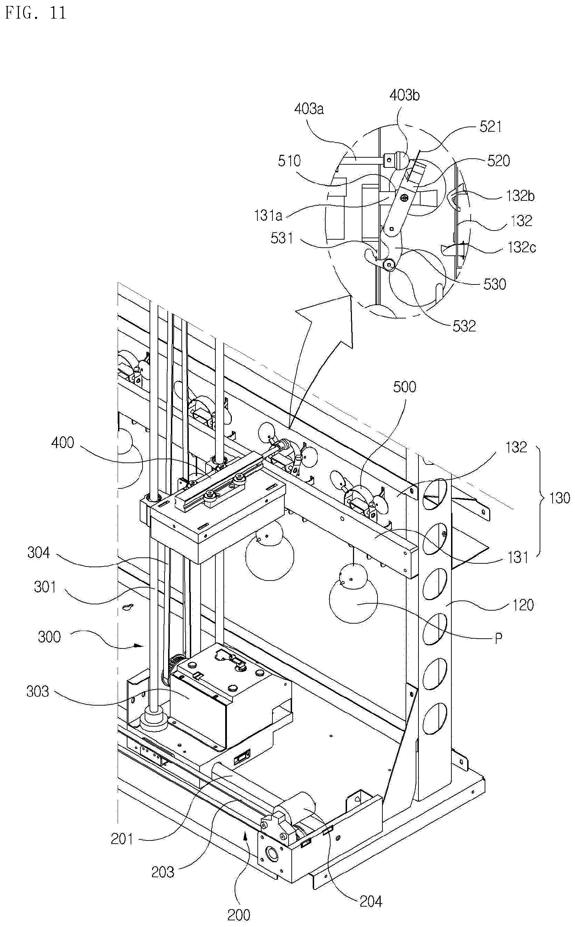

Referring to FIGS. 1 to 11, a housing 100 has a hollow shape and includes a viewing window 110 formed on a front surface thereof, support units 120 formed to protrude upright on both inner side surfaces thereof, and a prize holder 130 installed to connect the support units 120.

The front surface of the housing 100 may be opened or closed in a rotation manner due to a hinge unit (no reference numeral) formed at one side of the front surface of the housing 100.

The housing 100 includes a coin slot (no reference numeral), a card reader (no reference numeral), and a control unit C formed on the front surface thereof.

The control unit C controls operations of a horizontal driving unit 200, an elevation driving unit 300, and a pressing device 400.

The housing 100 further includes a drop hole 100a formed in an inner lower surface thereof, a prize outlet 100b communicating with the drop hole 100a to discharge a prize to a front lower end of the housing 100, a prize storage unit 100c communicating with the drop hole 100a to accommodate the prize inside the housing 100, and an opening/closing door 100d rotatably installed between the prize outlet 100b and the prize storage unit 100c to rotate so that the prize outlet 100b or the prize storage unit 100c communicates with the drop hole 100a.

The drop hole 100a is formed in a structure in which an upper portion is wide and a lower portion is narrow to guide the prize dropped from the prize holder 130 to move to the prize outlet 100b or the prize storage unit 100c.

The drop hole 100a communicates with the prize outlet 100b or the prize storage unit 100c by the opening/closing door 100d.

The prize outlet 100b guides the prize to be discharged to the front surface of the housing 100.

The prize outlet 100b is blocked or communicates with the drop hole 100a by the opening/closing door 100d.

The prize storage unit 100c allows prizes separately dropped from the prize holder 130 due to a malfunction or an improper operation to be accommodated.

The prize storage unit 100c is blocked or communicates with the drop hole 100a by the opening/closing door 100d.

The opening/closing door 100d is opened and closed so that the drop hole 100a and the prize outlet 100b communicate with each other or the drop hole 100a and the prize storage unit 100c communicate with each other after receiving a signal of a detection sensor 132b or an illegality detection sensor 132d of the prize holder 130.

The opening/closing door 100d is rotated by a motor (not illustrated).

The support units 120 are formed to protrude symmetrically with each other in an upright direction to support the prize holder 130.

The support units 120 are installed not to be interfered with the horizontal driving unit 200, the elevation driving unit 300, and the pressing device 400.

A plurality of prize holders 130 are vertically installed between the support units 120 so that hook clips 500 are hung thereon.

The prize holder 130 of the housing 100 further includes a front plate 131 having a plurality of hanging rods 131a spaced a predetermined interval from each other in a longitudinal direction of a rear surface thereof.

The hanging rod 131a allows the hook clip 500 to be hung to guide the hook clip 500 to move rearward by the pressing device 400.

In the housing 100, an end of the hanging rod 131a of the front plate 131 is formed to extend to be inclined at a predetermined angle.

The ends of the hanging rods 131a are formed at different inclination angles, thereby increasing a level of difficulty at which the hook clip 500 is separated.

The prize holder 130 of the housing 100 further includes a rear plate 132 installed symmetrically with the front plate 131 and having a drop prevention hook 132a formed at a lower end of a surface facing the hanging rod 131a.

The drop prevention hook 132a allows a prize hook unit 530 of the hook clip 500 separately dropped from the hanging rod 131a to be rotated to be hung on separate the prize from the prize hook unit 530, thereby preventing the hook clip 500 from being dropped to the drop hole 100a.

The housing 100 includes the detection sensor 132b installed to be exposed to the front surface of the rear plate 132 and pressed by the hook clip 500 separated from the hanging rod 131a to rotate the opening/closing door 100d so that the drop hole 100a communicates with the prize outlet 100b, and a drop stopper 132c installed on a lower end of the detection sensor 132b to be exposed to the front surface of the rear plate 132 to allow a rotational support shaft 522 of the hook clip 500 to be hung thereon or release the hanging from the rotational support shaft so that the hook clip 500 is dropped downward by moving rearward to enter the rear plate 132 after receiving a signal of the detection sensor 132b.

The detection sensor 132b is pressed by the hook clip 500 to output a signal to the opening/closing door 100d so that the opening/closing door 100d allows the drop hole 100a and the prize outlet 100b to communicate with each other.

The detection sensor 132b simultaneously outputs the signal to the opening/closing door 100d and the drop stopper 132c while maintaining a state of being pressed by a moving frame 510 of the hook clip 500.

The drop stopper 132c allows the rotational support shaft 522 to be hung on an upper end thereof.

The drop stopper 132c is horizontally operated by a solenoid valve S to enter the rear plate 132 or be exposed to the front surface of the rear plate 132.

The solenoid valve S is installed on a rear surface of the rear plate 132 to horizontally move the drop stopper 132c.

The drop stopper 132c receives a signal of the detection sensor 132b or the illegality detection sensor 132d and enters the rear plate 132 to guide the hook clip 500 to drop.

The housing 100 further includes the illegality detection sensor 132d fixedly installed on a wall surface of an inner lower end thereof to operate in response to vibrations applied to the housing 100 and for rotating the opening/closing door 100d to allow the drop hole 100a and the prize storage unit 100c to communicate with each other so that a prize dropped from the drop stopper 132c is supplied to the prize storage unit 100c.

When the illegality detection sensor 132d simultaneously detects the vibrations caused by an external impact applied to the housing 100 and the signal of the detection sensor 132b, it is determined that it is an illegal behavior to rotate the opening/closing door 100d so that the drop hole 100a communicates with the prize storage unit 100c, and thus the prize dropped from the drop hole 100a is accommodated in the prize storage unit 100c.

When the illegality detection sensor 132d detects the vibrations caused by the external impact applied to the housing 100 and the detection sensor 132b does not detect a signal, it is determined that it is a simple error, and thus the opening/closing door 100d is not operated.

The horizontal driving units 200 are symmetrically provided on the inner upper and lower surfaces of the housing 100 and slidably installed to horizontally move.

The horizontal driving unit 200 horizontally moves to adjust a position of the elevation driving unit 300.

The horizontal driving unit 200 further includes horizontal guide bars 201 symmetrically installed on the inner upper and lower surfaces of the housing 100, a horizontal movement block 202 slidably coupled to the horizontal guide bar 201 to horizontally move along the horizontal guide bar 201, a horizontal driving belt 203 connected to the horizontal movement block 202 and having both ends connected to pulleys 203a installed at both sides of the inner lower surface of the housing 100 to rotate, and a first driving motor 204 connected to any one of the pulleys 203a to rotate the pulley 203a.

The horizontal guide bar 201 guides the horizontal movement block 202 to horizontally move.

The horizontal movement block 202 forcibly moves along the horizontal guide bar 201 by the horizontal driving belt 203.

The horizontal driving belt 203 horizontally moves the horizontal movement block 202 while receiving power of the first driving motor 204 to circulate.

The first driving motor 204 and a second driving motor 303 of the elevation driving unit 300 may be operated simultaneously or sequentially.

The elevation driving unit 300 is installed between the horizontal driving units 200 to move up and down.

The elevation driving unit 300 adjusts a height of the pressing device 400.

The elevation driving unit 300 further includes an upright guide bar 301 installed upright to connect the horizontal driving units 200, an elevation block 302 slidably coupled to the upright guide bar 301 to vertically move up and down along the upright guide bar 301, the second driving motor 303 installed on the upper surface of the horizontal driving unit 200 installed on the inner lower surface of the housing 100 to transmit power, and an upright driving belt 304 installed to connect the second driving motor 303 to the horizontal driving unit 200 installed on the inner upper surface of the housing to force the elevation block 302 to move up and down while circulating.

The upright guide bar 301 guides the elevation block 302 to vertically move up or down.

The elevation block 302 is vertically moved up or down by the upright driving belt 304.

The second driving motor 303 forces the upright driving belt 304 to circulate in an upright direction.

The upright driving belt 304 is connected to a pulley (no reference numeral) installed on the horizontal driving unit 200.

The pressing device 400 is installed on an upper surface of the elevation driving unit 300 and horizontally operates along the prize holder 130 of the housing 100.

The pressing device 400 presses any one of both ends or a central portion of the hook clip 500 to force the hook clip 500 to be separately dropped to the end of the hanging rod 131a of the prize holder 130.

The pressing device 400 further includes a pinion gear 401 installed to be exposed to the upper surface of the elevation driving unit 300, a third driving motor 402 installed to be embedded inside the elevation driving unit 300 to be connected to the pinion gear 401 to rotate the pinion gear 401, a rack gear 403 installed on the upper surface of the elevation driving unit 300 to be engaged with the pinion gear 401, having a hitting bar 403a formed at a front end thereof, and horizontally moving toward the prize holder 130 or a direction opposite to the prize holder 130 by the rotating pinion gear 401, and guide rollers 404 installed at both sides of the upper surface of the elevation driving unit 300 based on the rack gear 403 and in close contact with both side surfaces of the rack gear 403 to guide the rack gear 403 to horizontally move.

The pinion gear 401 is rotated by the second driving motor 303 to horizontally move the rack gear 403.

The rack gear 403 is horizontally moved by the pinion gear 401 to hit the hook clip 500 with the hitting bar 403a.

The rack gear 403 has a hitting protrusion 403b having any one of circular, semicircular, elliptical, or polygonal shapes formed at an end of the hitting bar 403a.

A level of difficulty at which the hook clip 500 is hit varies depending on a shape of the hitting protrusion 403b.

The guide roller 404 rotates in place by friction with an outer surface of the horizontally moving rack gear 403, thereby preventing movement of the rack gear 403.

The hook clip 500 is hung on the prize holder 130 of the housing 100, allows the prize to be hung on a lower end thereof, and is moved rearward to the end of the prize holder 130 by pressing any one of both ends of the hook clip 500 by the pressing device or rotated in place on the prize holder 130 by pressing the central portion thereof by the pressing device.

The hook clip 500 guides prizes having different loads to be hung on the prize holder 130.

Since the hook clip 500 rotates in place when the central portion is pressed by the pressing device 400, the hook clip 500 is restricted to move rearward along the hanging rod 131a.

The hook clip 500 forms a hitting frame 520 by forming the moving frame 510 seated on the hanging rod 131a to horizontally move along the hanging rod 131a, and hitting plates 521 rotatably installed at both ends of the moving frame 510 to be rotated in place about the moving frame 510 as a central portion thereof is hit by the pressing device 400, and configured to guide the moving frame 510 to horizontally move by hitting both side surfaces by the pressing device 400 to allow the prize to be hung on a lower end thereof.

When the hitting plate 521 of the hitting frame 520 is hit, the moving frame 510 moves rearward while being slid along the hanging rod 131a.

The moving frame 510 maintains a state of being in close contact with the hanging rod 131a by a load of the prize hung on the hook clip 500.

The moving frame 510 guides the hitting frame 520 to rotate in place.

The hitting frame 520 is formed in a "∩" shape and formed to cover an upper portion of the moving frame 510.

The hitting plates 521 are formed symmetrically with each other and hit by the pressing device 400 so that the hitting frame 520 moves rearward while being slid in a zigzag manner along the moving frame 510.

The hitting plates 521 are formed to be inclined at a predetermined angle at both sides of an upper end of the hitting frame 520.

The hitting frame 520 rotates so that an upper end is pushed toward the rear plate 132 based on the moving frame 510 by hitting the central portion thereof by the pressing device and then is returned to an original position.

The hook clip 500 further includes the rotational support shaft 522 connecting the lower ends of the hitting frame 520, and the prize hook unit 530 including a hanging groove 531 provided between the hitting frame 520 and the prize, rotatably installed on the rotational support shaft 522, and having an open one surface at a lower end thereof to allow the prize to be hung on an inner side thereof, and a drop prevention rotational shaft 532, which is hung on the drop prevention hook 132a when the hook clip 500 is separately dropped from the hanging rod 131a to guide the hanging groove 531 to rotate downward, formed around the hanging groove 531.

The rotational support shaft 522 is hung on the drop stopper 132c of the rear plate 132 when the hook clip 500 is separately dropped from the hanging rod 131a so that the moving frame 510 presses the detection sensor 132b.

The rotational support shaft 522 is rotated in a downward inclined direction by the prize hook unit 530 hung by the drop prevention hook 132a when the drop stopper 132c is released and rotated by the load of the prize, thereby preventing the rotational support shaft 522 from entering the drop prevention hook 132a.

The drop prevention rotational shaft 532 is hung on the drop prevention hook 132a and at the same time, is rotated about the drop prevention hook 132a by the load of the prize so that the hanging groove 531 and the rotational support shaft 522 of the hitting frame 520 face the downward inclined direction, and thus allows the prize hung on the hanging groove 531 to drop to the drop hole 100a of the housing 100.

The prize hook unit 530 rotates about the drop prevention hook 132a to position the hitting frame 520 under the drop prevention hook 132a so that the upper end of the hitting frame 520 faces downward.

The push type prize game machine according to the present disclosure configured as described above is used as follows.

First, payment proceeds by inserting a coin through a coin slot (no reference numeral) of the housing 100 or through a card reader (no reference numeral), and in that state, a user moves the pressing device 400 to a position at which a prize is positioned by operating the control unit C after checking the prize to be acquired.

At this time, the hook clip 500 is hung on the hanging rod 131a formed on the front plate 131 of the prize holder 130, and a different prize is hung on each of the hook clips 500 and thus the prizes are mounted on the prize holder 130.

Meanwhile, the horizontal driving unit 200 and the elevation driving unit 300 is operated horizontally and vertically toward the prize by operating the control unit C to move the pressing device 400 to the hook clip 500 on which the prize is hung.

That is, when the control unit C is operated to allow the pressing device 400 to horizontally move, the first driving motor 204 of the horizontal driving unit 200 rotates to rotate the pulleys 203a, and at this time, the horizontal driving belt 203 connected between the pulleys 203a forces the horizontal movement block 202 to move along the horizontal guide bar 201 while circulating, and thus the elevation driving unit 300 horizontally moves to move the pressing device 400 so that the pressing device 400 is positioned on the same vertical line as the hook clip 500 on which the prize is hung.

Subsequently, when the control unit C is operated to allow the pressing device 400 to move up or down, the second driving motor 303 of the elevation driving unit 300 rotates to circulate the upright driving belt 304, and at this time, the elevation block 302 connected to the upright driving belt 304 vertically moves up or down along the upright guide bar 301 so that the pressing device 400 is positioned on the same horizontal line as the hook clip 500.

Thereafter, when the third driving motor 402 of the pressing device 400 is operated by operating the control unit C, the pinion gear 401 connected to the third driving motor 402 rotates to force the rack gear 403 to horizontally move, and thus the hitting protrusion 403b installed at the end of the hitting bar 403a presses the hook clip 500 so that the hook clip 500 rotates in place or moves rearward according to a hit position of the hook clip 500.

Here, both side surfaces of the rack gear 403 are supported by the guide rollers 404, thereby preventing the rack gear 403 from moving to a left or right side when the rack gear 403 moves forward to the hook clip 500 or moves rearward in a direction opposite to the hook clip 500.

In particular, when the hitting plate 521 formed on the hitting frame 520 of the hook clip 500 is hit by the pressing device 400, the hitting plate 521 is hit by the hitting protrusion 403b of the pressing device 400 to move rearward, and at this time, the moving frame 510 connected to the hitting frame 520 is slid along the hanging rod 131a to move rearward.

Here, the hitting plates 521 are installed at both sides of the hitting frame 520, and the moving frame 510 repeatedly moves rearward while being pushed in any one direction along the hanging rod 131a or repeatedly moves rearward while being pushed in a zig-zag manner along the hanging rod 131a to correspond to the hitting plate 521 hit by the hitting protrusion 403b among the hitting plates 521.

That is, when any one of the hitting plates 521 is intensively hit by the hitting protrusion 403b, the moving frame 510 moves rearward while being consecutively pushed in one direction along the hanging rod 131a, and when the hitting plates 521 symmetrical to each other are alternately hit, the moving frame 510 moves rearward while being consecutively pushed in a zig-zag manner along the hanging rod 131a.

In addition, as described above, the hook clip 500 hit by the hitting protrusion 403b is positioned at the end of the hanging rod 131a, and at this time, is separately dropped from the end of the hanging rod 131a toward the rear plate 132 of the prize holder 130 by being consecutively hit by the hitting protrusion 403b.

Here, the end of the hanging rod 131a may be formed to extend at a predetermined angle to adjust the level of difficulty at which the hook clip 500 is separately dropped from the end of the hanging rod 131a.

In this case, when the angle of the end of the hanging rod 131a is formed to be relatively steeper than angles of ends of other hanging rods 131a, the hook clip 500 is slide to move forward to the front plate 131 due to a steep surface when the pressing of the hook clip 500 is released.

On the other hand, when the central portion of the hitting frame 520 of the hook clip 500 is hit by the hitting protrusion 403b of the pressing device 400, the hitting frame 520 rotates so that the upper end of the hitting frame 520 is pushed back based on the moving frame 510 and then is returned to the original position to block the sliding movement of the moving frame 510.

In addition, the upper end of the hitting frame 520 and the hitting plates 521 are exposed to an upper portion of the front plate 131, and the moving frame 510 is covered by the front plate 131 to prevent the pressing device 400 from hitting the moving frame 510.

Meanwhile, the hook clip 500 is separately dropped from the hanging rod 131a and at the same time, the rotational support shaft 522 formed on the hitting frame 520 of the hook clip 500 is hung on the drop stopper 132c formed on the rear plate 132, and at this time, the moving frame 510 maintains a state of pressing the detection sensor 132b, and thus the detection sensor 132b outputs the signal to the opening/closing door 100d.

Then, the opening/closing door 100d rotates to allow the drop hole 100a and the prize outlet 100b to communicate with each other and at the same time, block the prize storage unit 100c.

When the hook clip 500 is separately dropped from the hanging rod 131a as described above and thus the detection sensor 132b is simultaneously turned on in a state in which the housing 100 is vibrated due to an external impact and thus the illegality detection sensor 132d is turned on, the signals of the detection sensor 132b and the illegality detection sensor 132d are simultaneously input to the opening/closing door 100d, and at this time, the opening/closing door 100d rotates to allow the drop hole 100a and the prize storage unit 100c to communicate with each other to block the prize outlet 100b.

Thereafter, as described above, when the detection sensor 132b is independently turned on or the detection sensor 132b and the illegality detection sensor 132d are simultaneously turned on, the drop stopper 132c operates at a predetermined time interval to move rearward into the rear plate 132 in a state in which the opening/closing door 100d allows the drop hole 100a to communicate with the prize outlet 100b or the prize storage unit 100c.

Here, the drop stopper 132c moves forward or rearward by a solenoid valve (no reference numeral) to allow the dropped rotational support shaft 522 to be hung thereon or release the hanging from the rotational support shaft 522.

Then, the rotational support shaft 522 is dropped from the drop stopper 132c, and the drop prevention rotational shaft 532 of the prize hook unit 530 is hung on the drop prevention hook 132a, and at this time, the drop prevention rotational shaft 532 of the prize hook unit 530 rotates in a downward inclined direction based on the drop prevention hook 132a by a load of the prize hung on the hanging groove 531 of the prize hook unit 530 so that the hanging groove 531 faces downward.

In addition, the prize is dropped from the hanging groove 531 rotated to face downward, and at this time, the hitting frame 520 and the moving frame 510 simultaneously rotate in a downward inclined direction to be maintained in a state of being hung on a lower side of the drop prevention hook 132a.

Thereafter, the prize separately dropped from the hook clip 500 enters the drop hole 100a and then is guided by the opening/closing door 100d to be supplied to the prize outlet 100b or the prize storage unit 100c.

That is, when the prize is dropped by allowing the hook clip 500 to be separately dropped from the hanging rod 131a in a state in which the illegality detection sensor 132d of the housing 100 is turned off, the prize is acquired through the prize outlet 100b, and when the prize is dropped by allowing the hook clip 500 to be separately dropped from the hanging rod 131a in a state in which the illegality detection sensor 132d is turned on by an applied external impact to the housing 100, the prize is stored in the prize storage unit 100c to block the acquisition of the prize through illegal behavior.

As described above, in a structure of blocking the rearward movement of the hook clip 500 by allowing the hook clip 500 to rotate in place when the central portion of the hook clip 500 is hit and allowing the hook clip 500 to be moved rearward by hitting any one of both ends of the hook clip 500, damage to the prize is prevented by the pressing device 400 directly hitting the hook clip 500 so that the hook clip 500 on which the prize is hung is separately dropped from the prize holder 130 in order to acquire the prize, there is no change in the level of difficulty in the game according to the volume or load of the prize by arranging the hook clips 500 having the same shape on the prize holder 130, and an user can accurately recognize the hit position of the hook clip 500 by allowing the hook clip 500 to move rearward when any one of both ends of the hook clip 500 is hit and allowing the hook clip 500 to rotate in place when the central portion of the hook clip 500 is hit to restrict the rearward movement of the hook clip 500.

According to the present disclosure, it is possible to prevent damage to a prize by directly hitting a hook clip by a pressing device so that the hook clip on which a prize is hung is separately dropped from a prize holder in order to acquire the prize, there is no change in a level of difficulty of a game according to a volume or load of the prize by arranging the hook clips having the same shape on the prize holder, a user can accurately recognize a hit position of the hook clip and one of any age can easily play the game due to an exposure of an accurate hit position of the hook clip by allowing the hook clip to move rearward when any one of both ends of the hook clip is hit and restricting the rearward movement of the hook clip while the hook clip rotates in place when a central portion of the hook clip is hit, thereby inducing the interest in the game for acquiring the prize and at the same time, improving reliability of products.

The above-described push type prize game machine according to the present disclosure is not limited to the above-described embodiments, and those skilled in the art to which the present disclosure pertains has a technical spirit up to a scope in which the present disclosure can be variously changed and carried out without departing from the gist of the present disclosure described in the appended claims.

## Claims

1. A push type prize game machine comprising:
a housing (100) having a hollow shape, and including a viewing window (110) formed on a front surface thereof, support units (120) formed to protrude upright on both inner side surfaces thereof, and a prize holder (130) installed to connect the support units (120);
horizontal driving units (200) symmetrically provided on inner upper and lower surfaces of the housing (100) and slidably installed to horizontally move;
an elevation driving unit (300) installed between the horizontal driving units (200) to move up and down;
a pressing device (400) installed on an upper surface of the elevation driving unit (300) to horizontally operate toward the prize holder (130) of the housing (100); and
a hook clip (500) hung on the prize holder (130) of the housing (100), allowing a prize to be hung on a lower end thereof, and moved rearward to an end of the prize holder (130) by pressing any one of both ends of the hook clip (500) by the pressing device or rotated in place on the prize holder (130) by pressing a central portion thereof by the pressing device (400).

2. The push type prize game machine of claim 1, wherein a front plate (131) having a plurality of hanging rods (131a) formed to be spaced a predetermined distance from each other in a longitudinal direction of a rear surface thereof is further formed in the prize holder (130) of the housing (100), and
the hook clip (500) includes:
a moving frame (510) seated on the hanging rod (131a) to horizontally move along the hanging rod (131a); and
a hitting frame (520) rotatably installed at both ends of the moving frame (510) to rotate in place about the moving frame (510) by hitting a central portion thereof by the pressing device (400), and having hitting plates (521) formed on both side surfaces thereof and configured to guide the moving frame (510) to be horizontally moved by being hit by the pressing device (400) to allow the prize to be hung on a lower end thereof.

3. The push type prize game machine of claim 2, wherein the prize holder (130) of the housing (100) further includes a rear plate (132) installed symmetrically with the front plate (131) and having a drop prevention hook (132a) formed at a lower end of a surface facing the hanging rod (131a), and
the hook clip (500) further includes:
a rotational support shaft (522) connecting the lower ends of the hitting frame; and
a prize hook unit (530) provided between the hitting frame (520) and the prize, rotatably installed on the rotational support shaft (522), having a hanging groove (531) of which one surface is open to allow the prize to be hung on an inner side thereof, formed in a lower end thereof, and having a drop prevention rotational shaft (532) hung on the drop prevention hook (132a) when the hook clip (500) is separately dropped from the hanging rod (131a) to guide the hanging groove (531) to rotate downward, formed around the hanging groove (531).

4. The push type prize game machine of claim 2, wherein, in the housing (100), an end of the hanging rod (131a) of the front plate (131) is formed to extend to be inclined at a predetermined angle.

5. The push type prize game machine of claim 3, wherein the housing (100) further includes:
a drop hole (100a) formed in the inner lower surface thereof;
a prize outlet (100b) communicating with the drop hole (100a) to discharge the prize to a lower end of the front surface of the housing (100);
a prize storage unit (100c) communicating with the drop hole (100a) to accommodate the prize inside the housing (100);
an opening/closing door (100d) rotatably installed between the prize outlet (100b) and the prize storage unit (100c) to rotate so that the prize outlet (100b) or the prize storage unit (100c) communicates with the drop hole (100a);
a detection sensor (132b) installed to be exposed to a front surface of the rear plate (132) and pressed by the hook clip (500) separated from the hanging rod (131a) to rotate the opening/closing door (100d) so that the drop hole (100a) communicates with the prize outlet (100b); and
a drop stopper (132c) installed on a lower end of the detection sensor (132b) to be exposed to the front surface of the rear plate (132) to allow the rotational support shaft of the hook clip (500) to be hung thereon or release the hanging from the rotational support shaft so that the hook clip (500) is dropped downward by moving rearward to enter the rear plate (132) after receiving a signal of the detection sensor (132b).

6. The push type prize game machine of claim 5, wherein the housing (100) further includes an illegality detection sensor (132d) fixedly installed on a wall surface of an inner lower end thereof to operate in response to vibrations applied to the housing (100) and configured to rotate the opening/closing door (100d) to allow the drop hole (100a) and the prize storage unit (100c) to communicate with each other so that the prize dropped from the drop stopper (132c) is supplied to the prize storage unit (100c).

7. The push type prize game machine of claim 1, wherein the horizontal driving unit (200) further includes:
horizontal guide bars (201) symmetrically installed on the inner upper and lower surfaces of the housing (100);
horizontal movement blocks (202) slidably coupled to the horizontal guide bars (201) to horizontally move along the horizontal guide bars (201);
a horizontal driving belt (203) connected to the horizontal movement block (202) and having both ends connected to pulleys (203a) installed at both sides of the inner lower surface of the housing (100) to rotate; and
a first driving motor (204) connected to any one of the pulleys (203a) to rotate the pulley (203a).

8. The push type prize game machine of claim 1, wherein the elevation driving unit (300) further includes:
an upright guide bar (301) installed upright to connect the horizontal driving units (200);
an elevation block (302) slidably coupled to the upright guide bar (301) to vertically move up and down along the upright guide bar (301);
a second driving motor (303) installed on an upper surface of the horizontal driving unit (200) installed on the inner lower surface of the housing (100) to transmit power; and
an upright driving belt (304) installed to connect the second driving motor (303) to the horizontal driving units (200) installed on the inner upper surface of the housing (100) to force the elevation block (302) to move up or down while rotating.

9. The push type prize game machine of claim 1, wherein the pressing device (400) further includes:
a pinion gear (401) installed to be exposed to the upper surface of the elevation driving unit (300);
a third driving motor (402) installed to be embedded inside the elevation driving unit (300) to be connected to the pinion gear (401) to rotate the pinion gear (401);
a rack gear (403) installed on the upper surface of the elevation driving unit (300) to be engaged with the pinion gear (401), having a hitting bar (403a) formed on a front end thereof, and configured to horizontally move to move toward the prize holder (130) or move in an opposite direction to the prize holder (130) by the rotating pinion gear (401); and
guide rollers (404) installed at both sides of the upper surface of the elevation driving unit (300) based on the rack gear (403) and in close contact with both side surfaces of the rack gear (403) to guide the rack gear (403) to horizontally move.

10. The push type prize game machine of claim 9, wherein the rack gear (403) has a hitting protrusion (403b) having any one of circular, semicircular, elliptical, or polygonal shapes formed at an end of the hitting bar (403a).

## Amended claims

### Amended claims in accordance with Rule 137(2) EPC.

1. A push type prize game machine comprising:
a housing (100) having a hollow shape, and including a viewing window (110) formed on a front surface thereof, support units (120) formed to protrude upright on both inner side surfaces thereof, and a prize holder (130) installed to connect the support units (120);
horizontal driving units (200) symmetrically provided on inner upper and lower surfaces of the housing (100) and slidably installed to horizontally move;
an elevation driving unit (300) installed between the horizontal driving units (200) to move up and down; **characterized in that**:
a pressing device (400) installed on an upper surface of the elevation driving unit (300) to horizontally operate toward the prize holder (130) of the housing (100); and
a hook clip (500) hung on the prize holder (130) of the housing (100), allowing a prize to be hung on a lower end thereof, and moved rearward to an end of the prize holder (130) by pressing any one of both ends of the hook clip (500) by the pressing device or rotated in place on the prize holder (130) by pressing a central portion thereof by the pressing device (400), wherein a front plate (131) having a plurality of hanging rods (131a) formed to be spaced a predetermined distance from each other in a longitudinal direction of a rear surface thereof is further formed in the prize holder (130) of the housing (100), and
the hook clip (500) includes:
a moving frame (510) seated on the hanging rod (131a) to horizontally move along the hanging rod (131a); and
a hitting frame (520) rotatably installed at both ends of the moving frame (510) to rotate in place about the moving frame (510) by hitting a central portion thereof by the pressing device (400), and having hitting plates (521) formed on both side surfaces thereof and configured to guide the moving frame (510) to be horizontally moved by being hit by the pressing device (400) to allow the prize to be hung on a lower end thereof; and the hook clip (500) is pressed to be separately dropped from the prize holder (130).

2. The push type prize game machine of claim 1, wherein the prize holder (130) of the housing (100) further includes a rear plate (132) installed symmetrically with the front plate (131) and having a drop prevention hook (132a) formed at a lower end of a surface facing the hanging rod (131a), and
the hook clip (500) further includes:
a rotational support shaft (522) connecting the lower ends of the hitting frame; and
a prize hook unit (530) provided between the hitting frame (520) and the prize, rotatably installed on the rotational support shaft (522), having a hanging groove (531) of which one surface is open to allow the prize to be hung on an inner side thereof, formed in a lower end thereof, and having a drop prevention rotational shaft (532) hung on the drop prevention hook (132a) when the hook clip (500) is separately dropped from the hanging rod (131a) to guide the hanging groove (531) to rotate downward, formed around the hanging groove (531).

3. The push type prize game machine of claim 1, wherein, in the housing (100), an end of the hanging rod (131a) of the front plate (131) is formed to extend to be inclined at a predetermined angle.

4. The push type prize game machine of claim 2, wherein the housing (100) further includes:
a drop hole (100a) formed in the inner lower surface thereof;
a prize outlet (100b) communicating with the drop hole (100a) to discharge the prize to a lower end of the front surface of the housing (100);
a prize storage unit (100c) communicating with the drop hole (100a) to accommodate the prize inside the housing (100);
an opening/closing door (100d) rotatably installed between the prize outlet (100b) and the prize storage unit (100c) to rotate so that the prize outlet (100b) or the prize storage unit (100c) communicates with the drop hole (100a);
a detection sensor (132b) installed to be exposed to a front surface of the rear plate (132) and pressed by the hook clip (500) separated from the hanging rod (131a) to rotate the opening/closing door (100d) so that the drop hole (100a) communicates with the prize outlet (100b); and
a drop stopper (132c) installed on a lower end of the detection sensor (132b) to be exposed to the front surface of the rear plate (132) to allow the rotational support shaft of the hook clip (500) to be hung thereon or release the hanging from the rotational support shaft so that the hook clip (500) is dropped downward by moving rearward to enter the rear plate (132) after receiving a signal of the detection sensor (132b).

5. The push type prize game machine of claim 4, wherein the housing (100) further includes an illegality detection sensor (132d) fixedly installed on a wall surface of an inner lower end thereof to operate in response to vibrations applied to the housing (100) and configured to rotate the opening/closing door (100d) to allow the drop hole (100a) and the prize storage unit (100c) to communicate with each other so that the prize dropped from the drop stopper (132c) is supplied to the prize storage unit (100c).

6. The push type prize game machine of claim 1, wherein the horizontal driving unit (200) further includes:
horizontal guide bars (201) symmetrically installed on the inner upper and lower surfaces of the housing (100);
horizontal movement blocks (202) slidably coupled to the horizontal guide bars (201) to horizontally move along the horizontal guide bars (201);
a horizontal driving belt (203) connected to the horizontal movement block (202) and having both ends connected to pulleys (203a) installed at both sides of the inner lower surface of the housing (100) to rotate; and
a first driving motor (204) connected to any one of the pulleys (203a) to rotate the pulley (203a).

7. The push type prize game machine of claim 1, wherein the elevation driving unit (300) further includes:
an upright guide bar (301) installed upright to connect the horizontal driving units (200);
an elevation block (302) slidably coupled to the upright guide bar (301) to vertically move up and down along the upright guide bar (301);
a second driving motor (303) installed on an upper surface of the horizontal driving unit (200) installed on the inner lower surface of the housing (100) to transmit power; and
an upright driving belt (304) installed to connect the second driving motor (303) to the horizontal driving units (200) installed on the inner upper surface of the housing (100) to force the elevation block (302) to move up or down while rotating.

8. The push type prize game machine of claim 1, wherein the pressing device (400) further includes:
a pinion gear (401) installed to be exposed to the upper surface of the elevation driving unit (300);
a third driving motor (402) installed to be embedded inside the elevation driving unit (300) to be connected to the pinion gear (401) to rotate the pinion gear (401);
a rack gear (403) installed on the upper surface of the elevation driving unit (300) to be engaged with the pinion gear (401), having a hitting bar (403a) formed on a front end thereof, and configured to horizontally move to move toward the prize holder (130) or move in an opposite direction to the prize holder (130) by the rotating pinion gear (401); and
guide rollers (404) installed at both sides of the upper surface of the elevation driving unit (300) based on the rack gear (403) and in close contact with both side surfaces of the rack gear (403) to guide the rack gear (403) to horizontally move.

9. The push type prize game machine of claim 8, wherein the rack gear (403) has a hitting protrusion (403b) having any one of circular, semicircular, elliptical, or polygonal shapes formed at an end of the hitting bar (403a).
